(19) **Europäisches Patentamt**
**European Patent Office**
**Office européen des brevets**

(11) **EP 3 660 765 A1**

(12) **EUROPEAN PATENT APPLICATION**

(43) Date of publication:
**03.06.2020 Bulletin 2020/23**

(51) Int Cl.:
***G06Q 20/02*** *(2012.01)*

(21) Application number: **18382870.6**

(22) Date of filing: **29.11.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ikerlan, S. Coop**
**20500 Arrasate-Mondragon (ES)**

(72) Inventors:
• **BILBAO UGALDE, Josu**
**20500 Arrasate-Mondragón, Guipúzcoa (ES)**

• **FLORES BARROSO, José Luis**
**20500 Arrasate-Mondragón, Guipúzcoa (ES)**
• **RUBIO MARTÍN, Óscar**
**20500 Arrasate-Mondragón, Guipúzcoa (ES)**
• **CRESPO BOFILL, Pedro**
**20018 Donostia-San Sebastián, Guipúzcoa (ES)**

(74) Representative: **ABG Intellectual Property Law, S.L.**
**Avenida de Burgos, 16D**
**Edificio Euromor**
**28036 Madrid (ES)**

(54) **COMPUTER-IMPLEMENTED METHOD FOR PROCESSING A DATA SET UNDER NON-DISCLOSURE CONDITIONS**

(57) A computer-implemented method for processing data in exchange for an agreed upon consideration in the form of cryptocurrency, which assures compliance with the terms of the agreement and the non-disclosure conditions between cooperating entities by means of executing a smart contract comprised in a blockchain, and with the application of homomorphic encryption on the data to be processed.

Fig. 1

**Description**

Object of the Invention

The present invention relates to a computer-implemented method for processing data in exchange for an agreed upon consideration in the form of cryptocurrency, which assures compliance with the terms of the agreement and the non-disclosure conditions between cooperating entities by means of executing a smart contract comprised in a blockchain, and with the application of a homomorphic encryption on the data to be processed.

Background of the Invention

The processing of increasingly more complex data sets may not be covered with existing technologies in a specific entity, with the collaboration of entities specializing in this field being required. However, said collaboration entails a dual difficulty:

- the contracting entity must choose from a set of entities specializing in data processing to obtain their solution without being certain that another or other specialized entities may reach a better solution to the problem.
- this is a common practice conditional to a trust issue between the cooperating parties.

A simple resource for overcoming the first difficulty would be to collaborate with more than one entity so as to obtain different alternatives to the solution that is sought. However, it is not at all a satisfactory option in economic terms given that it would be necessary to pay for the work of each of the contracted entities.

To overcome the second difficulty, it would conventionally be necessary to enter into a collaboration relationship by means of Service Level Agreements (SLAs), in which there are established conditions for outsourcing certain parts of the work, and by means of Non-disclosure Agreements (NDAs), which protect, up to a certain point, the confidentiality of the data used.

Nevertheless, the establishment of these agreements (SLA and NDA) entails significant notary costs, delays in initiating cooperation, and it does not fully guarantee compliance with the conditions. Such compliance requires the contracting party to perform a follow-up on the activity of the contracted company to make certain that the conditions are complied with. Furthermore, the contracted company acquires, in a voluntary or involuntary manner, knowledge about the information used and about the issues addressed by the contracting enterprise.

In recent years, a new solution to reduce the costs and delays characteristic of conventional agreements has become more relevant, and these are smart contracts, which are created, stored, and executed as a result of blockchain technology. A smart contract is understood as a computer program which is run and stored in a blockchain although, in the context of this invention, the computer program also facilitates, assures, enforces, and executes agreements recorded between two or more parties. Said computer program comprises data and instructions that can be run by the system, which is generally decentralized, on which it is implemented following the conditions defined in the agreement between the parties. When, throughout the description, phrases indicating that the smart contract carries out a specific action are used, it must be interpreted as said smart contract containing instructions which carry out the action when it is run in the system.

The agreements are created by a user and, by means of transactions, subsequently deployed in the blockchain, after which time they will be available so that other users, through other transactions, can interact with them. Blockchain technology acts like a distributed notary of said transactions, making them secure (immutable and verifiable), as all the data flows are validated and recorded by means of a consensus algorithm involving a sufficient majority of the blockchain nodes, and using cryptographic elements. Therefore, any modification of the pre-established conditions in the smart contract is hindered, assuring compliance therewith at all times.

As a result of the use of smart contracts, issues relating to the establishment and execution of the SLA can be solved, thereby reducing associated costs and start-up times. However, the use of a smart contract does not assure the confidentiality of the data, where the contracted company may unduly use the acquired information, thereby necessitating a verbal or written Non-disclosure Agreement (NDA).

Additionally, the advantage of blockchain technology resides precisely in the accessibility of any user to its content. It is common for smart contracts to be compiled in the blockchain, which provides a certain degree of obfuscation on the information stored therein. Nevertheless, it is also common for there to be decompilers which allow retrieving the content thereof in plaintext, which hinders the confidentiality of the information. Data is understood to be masked when it is illegible, but not because an encryption algorithm has been applied. Knowing the method is enough for translating obfuscated data into plaintext.

The following invention proposes a solution to the aforementioned issues by means of a computer-implemented method for data processing in a quick and competitive manner, assuring compliance with the non-disclosure conditions between the different cooperating entities in a secure and automatic manner, by means of executing a smart contract comprised in a blockchain.

Description of the Invention

The present invention proposes a solution to the aforementioned issues by means of a computer-implemented method for data processing assuring non-disclosure conditions between cooperating entities according to claim 1, a data processing system according to claim 13, a computer program according to claim 14, and a computer-readable medium according to claim 15. The dependent claims define preferred embodiments of the invention.

A first inventive aspect provides a computer-implemented method for processing a data set under non-disclosure conditions, the data set belonging to an owner user and being processed by one or more computing service provider users, the method operating through a smart contract stored in a blockchain configured for supporting cryptocurrency management and executing the smart contract, wherein the method comprises the following steps:

a) the owner user generating a smart contract comprising:

- a data set to be processed which is encrypted by means of a homomorphic encryption algorithm or a link to said data set to be processed which is encrypted, wherein the homomorphic encryption comprises a step of encrypting data in plaintext for obtaining the encrypted data and a step of decrypting the data that was previously encrypted in order to retrieve the data in plaintext, wherein said homomorphic encryption also comprises a predetermined set of pairs of operators formed by an original operator and an equivalent operator associated with the original operator, which verify the following condition:
given one or more arguments expressed in plaintext and operated with a specific original operator, the equivalent operator applied to the same arguments encrypted with the step of encrypting provides an also encrypted result which, once decrypted by means of the step of decrypting to express the result in plaintext, has a value equal to the result of applying the original operator on the arguments also expressed in plaintext,

- processing specifications of the data to be processed comprising:

    i. identification of the homomorphic encryption used in the encryption of the data set to be processed together with the set of available pairs of operators of the homomorphic encryption and the evaluation key which allows operating data in the homomorphic domain,
    ii. a mathematical problem solvable by means of processing the data set to be processed by means of the set of operators available in homomorphic encryption, wherein the solution or an approach to the solution of the mathematical problem is expressible in the form of one or more numerical parameters, and wherein the solution or the approach to the solution has a precision value,
    iii. an evaluation function of the solution or the approach to the solution configured for measuring the precision of the solution or of the approach to the solution when it is encrypted (for which it uses the evaluation key),
    iv. a measurement function of the reward value which determines the remuneration to be returned to the computing service provider user, with this being a value dependent on at least the evaluation function,
    v. a reward amount in cryptocurrency units to be distributed among the computing service provider users when a solution or an approach to the solution is recorded in the smart contract, such that the reward function determines a positive value,
    vi. a reward process executable by the smart contract, receiving a solution or an approach to the solution which is encrypted sent by a computing service provider user, transferring the cryptocurrency reward amount established by the measurement function of the reward value, if there are available cryptocurrency units, to said computing service provider user, with said solution or approach to the solution being recorded in the smart contract.

b) the owner user deploying the smart contract in the blockchain, enabling the computing service provider users of the blockchain to access the smart contract,
c) one or more computing service provider users solving the mathematical problem of the smart contract by processing the encrypted data set until obtaining a solution or an approach to the solution which is encrypted with a precision with a reward value that is at least positive according to the measurement function of the reward value, wherein said precision is determined by each of the computing service provider users executing the evaluation function,
d) one or more computing service provider users executing the reward process of the smart contract, with a positive reward value, wherein the reward process is according to the following steps:

*i. the smart contract receiving said solution or approach to the solution,*

*ii. executing the measurement function of the reward value for said solution or approach to the solution,*

*iii. providing the reward established by the reward function to the computing service provider user of the evaluated solution if there are available cryptocurrency units and if the value returned by the measurement function of the reward value is positive,*

*iv. recording said solution or approach to the solution that is evaluated in the smart contract in the event of a reward having been sent,*

*e) the owner user decrypting the solution or solutions or approach or approaches to the solution recorded in the smart contract, obtaining the solution or solutions or approach or approaches to the solution expressed in plaintext.*

Throughout this document, function will be understood to mean an element required for executing any of the steps of the method which involves the return of a value, but it is not a limiting factor of a mathematical function. The execution of a function may involve the execution of other auxiliary functions. In turn, process will be understood to mean an activity required for executing any of the steps of the method which does not necessarily involve the return of any value. The execution of a process may involve the execution of other auxiliary processes or functions.

Throughout this document, non-disclosure conditions will be understood to mean the conditions derived from the use of SLAs and NDAs. As indicated above, smart contract will be understood to mean a computer program which is run and stored in a blockchain, although in the context of this invention the computer program also executes agreements established between two or more parties in an automatic and autonomous manner, by means of pre-established actions in functions and/or methods. Furthermore, blockchain will be understood to mean a distributed technology which maintains an immutable and persistent record of the data it records, preventing any later modification of said data, and it allows transactions between nodes forming it without the need for any intermediary.

In the context of the invention, the blockchain in which the smart contract is deployed acts, in an automatic manner and with computing means, as a distributed notary which hinders any modification of the pre-established conditions and the use of the smart contract itself enables the cooperation between two entities without the need to use verbal or written agreements which entail associated notary fees and may experience delays in initiating cooperation.

The two cooperating entities of the smart contract are:

- The owner user, which is to be understood to mean one of the entities participating in the smart contract. This owner user has the data which will be operated upon, defines the conditions of said smart contract, and deploys it so as to make it available for third parties.
- The computing service provider user or users, which will be understood to mean entities which participate in the smart contract and operate upon the data of the owner user to provide a solution or an approach to the solution. These computing service provider users process the data using the homomorphic cryptography tool/library identified in the smart contract. The fact that the homomorphic cryptography tool/library is identified means that either the tool is identified directly or else type of cryptography is what is identified and the computing service provider user is who decides which tool/library implements that type of cryptography.

In a particular example, a computing service provider user is a data processing company. According to another specific example, a user service provider is an individual with sufficient specific computing means and knowledge.

The smart contract comprises:

1. The identification of the homomorphic encryption, comprising a description of the type of homomorphic encryption to be used, as well as of the operators available for said homomorphic encryption and the evaluation key which allows operating in the homomorphic domain. Throughout this document, operators will be understood to mean mathematical operators available in the programming language of the smart contract. Said operators have their equivalent operator in the homomorphic encryption domain, although they experience certain restrictions due to the domain change itself. Particular examples of operators are addition, subtraction, multiplication, division, comparison, and equality operators. Evaluation key will be understood to mean a key identified by the owner user in the smart contract which is used by the computing service provider user or users to enable processing the data in the homomorphic encryption domain.

According to the embodiments holding the most interest, all the operators can function with integers and decimal numbers. Furthermore, it is possible to operate with complicated functions, for example exponential functions, using their truncated Taylor series expansion since it only requires simple operations which are in fact supported by homomorphic encryption (addition, subtraction, multiplication, and division). Operators available for homomorphic encryption and also data types supported by said homomorphic encryption will normally be used. Nevertheless, this last requirement is not essential since for example, if it is necessary to use decimals and decimals are not supported, it is possible to only make use of integer data types combined with suitable scaling for conversion in both directions between large integer numbers and numbers with decimals with suitable precision.

A particular example of identification of the encryption would be the use of a link to homomorphic encryption libraries which will be used for processing the data, for example Microsoft SEAL, including the operators themselves. This identification may include additional information about the specific terms of use of the encryption libraries. It is stood out that throughout the entire document, the terms cypher/encrypt must be considered equivalents as well as all the terms derived from them.

2. A mathematical problem solvable by means of processing the data set to be processed by means of the set of operators available in homomorphic encryption.

3. An evaluation function of a solution or approach to the solution configured for measuring the precision thereof. Precision value or simply precision will be understood to mean a value which indicates how acceptable the solution or approach to the solution is according to the criterion of the owner user. This precision value is measurable by means of the evaluation function, in which it is necessary to implement the equivalent operators in the homomorphic encryption and the evaluation key.

4. A measurement function of the reward value which implements the particular reward policy of an owner user, said policy corresponding with the terms of the agreement/contract stipulated in the smart contract itself.

5. A reward amount in cryptocurrency units, the term cryptocurrency being understood to mean a virtual currency which can be exchanged and operated like any other conventional currency. In the context of the invention, cryptocurrency will be a virtual currency which makes use of blockchain technology to reward finding solutions or approaches to the solution of the data processing problem.

6. A reward process whereby the cryptocurrency units agreed upon are sent to the computing service provider user which has provided a solution or an approach to the solution which complies with the conditions of being rewarded and which is therefore recorded in the smart contract.

The combination of the smart contract and homomorphic data encryption guarantees compliance with the conditions agreed upon in an automatic manner, unlike what occurs with conventional agreements in which an intermediary or constant supervision of both parties, safeguarding compliance with said conditions, is required:

- the reward process implemented in the smart contract assures that in the event that the owner user has not deposited the number of cryptocurrency units agreed upon for rewarding a solution in the smart contract, said owner user does not receive the solution, i.e., the solution is not recorded in the smart contract, and
- the use of homomorphic cryptography allows the owner user to be able to encrypt its sensitive data before providing it to other entities, which will work with such data and obtain solutions also in an encrypted manner. Complete confidentiality of the data is thereby guaranteed so that third parties cannot make undue use of the information (of both the data and the solution).

Three keys are required in homomorphic cryptography for encrypting and decrypting data, as well as for working with encrypted data, and the creation of such keys depends on the parameters selected by the owner user of the smart contract; for example, the coefficient modulus or the standard deviation of noise. The keys that are generated are a) a public key used by the owner user for encrypting the data; b) a secret key used by the owner user for decrypting the solutions; and c) the aforementioned evaluation key which, together with the previously defined parameters, is used by computing service provider users for processing the data in the homomorphic encryption domain.

In a particular embodiment, *for each reward that is given, the solution or approach to the solution and the precision value associated with the solution or approach to the solution are recorded in the smart contract.*

With the method according to the invention, the smart contract is provided with a level of transparency such that computing service provider users may know that if a solution or an approach to the solution with a specific precision has already been received, they will have to find a solution or an approach to the solution with a higher precision in order to receive a reward and/or if a solution with the best possible precision has already been received, they will stop operating with the data as there is no possibility of being rewarded.

In a particular embodiment, *the measurement function of the reward value checks:*

- *if the precision value is less than a pre-established threshold value, and*
- *if another solution or another approach to the solution has previously been recorded, if the solution or approach to the solution of the computing service provider user has a precision value lower than the previously recorded precision values,*

*wherein the value of the reward is null in any of these cases.*

The measurement function of the reward value guarantees that only those solutions or approaches to the solution with a precision value which exceeds the expectations of the owner user will receive a reward. Furthermore, said function favors competition between computing service provider users as it prevents rewarding a solution which does not exceed the precision of another previously received solution.

As a result of the existence of the checking operator in the homomorphic encryption, it is possible to know if the precision of a solution or an approach to the solution exceeds a pre-established threshold (also homomorphically encrypted) and/or if it exceeds the precision of another solution or approach to the solution that was previously recorded. In such cases, the solution or approach to the solution is susceptible to be rewarded.

In a particular embodiment, *the measurement function of the reward value is established by predefining a plurality of ranges of values for the precision value and assigning a value of the measurement of the reward value for each of the ranges, such that given a precision value measured with respect to a solution or an approach to the solution, the measurement function of the reward value returns the value of the measurement assigned to the range in which said precision value is found.*

Throughout this document, ranges of values for the precision value or simply ranges of precision values will be understood as being defined by a lower threshold and an upper threshold of precision values which are encrypted in a homomorphic manner and selected by the owner user. Said ranges are preferably consecutive; i.e., the lower threshold of the range of higher precision coincides with the upper threshold of the second range of higher precision and so on and so forth.

Advantageously, the existence of ranges allows there to be several solutions or approaches to the solution that are rewarded, and in an even more advantageous manner, the possibility of associating different rewards with the different ranges encourages competition between computing service provider users, which will have to find solutions or approaches to the solution with precisions in the highest possible range of precision to receive the maximum reward that is available.

It is typically understood that the best rewarded ranges are those with higher required precision values.

In a particular embodiment, *given a solution or an approach to the solution identified in a specific range of values by its precision, the smart contract checks if another solution or another approach to the solution has previously been recorded in the same range of values, in which case the reward is null.*

As a result of the existence of the comparison and equality operators, the precision of a solution or an approach to the solution can be compared with the precision of another solution or approach to the solution that was previously recorded and identified in a range of precision values.

A smart contract thereby guarantees that only those solutions or approaches to the solution that have been the most efficient in terms of time management for a specific range of precision values are rewarded, and it furthermore promotes competition between computing service provider users, which will have to find solutions or approaches to the solution with precisions that are increasingly higher than those already recorded to enable receiving a reward.

In a particular embodiment, *the reward of a solution or an approach to the solution identified in a specific range of values by its precision is the sum of the reward corresponding* to *said range of precision values and of the rewards corresponding to lower ranges of precision values which have not previously been provided to any computing service provider user.*

The smart contract favors efficiency in terms of time management and competition between computing service provider users by offering a higher reward the sooner a solution is submitted, and the higher the range of precision in which the precision of the solution is comprised.

In a particular embodiment, *after recording a solution or an approach to the solution identified in a specific range of values by its precision, the smart contract provides to the owner user reimbursement for the rewards corresponding to the lower ranges of precision values which have not previously been provided to any computing service provider user.*

Advantageously, the smart contract offers the owner user the possibility of being reimbursed for some of the money invested in obtaining a solution.

In a particular embodiment, *the data processing specifications additionally comprise a pre-established numerical model as well as the identification of the parameters which the numerical model comprises.*

Throughout this document, numerical model will be understood to mean a mathematical model defined in the smart contract by the owner user. Particular examples of mathematical models are linear regression, clustering, neural networks, Naive Bayes or Fisher's discriminant.

The smart contract can identify the numerical model of the solution or approach to the solution which is allowed for the purpose of standardizing the form of expressing the solution or approach to the solution. As a result of this standardization, the evaluation function of the smart contract can take into account the parameterization of the solution, i.e., it knows how the solution is expressed, and it can therefore perform its task of calculating the precision of the solution or approach to the solution.

Furthermore, by pre-establishing a numerical model it is assured that the owner user is going to receive exactly the type of solution which is being sought and is useful. On the other hand, the description of the model and its parameters guides computing service provider users towards the solution or approach to the solution which is going to be valid, which allows them to be more efficient in the search for said solution.

According to a specific embodiment, the solution must provide the configuration of a specific neural network by establishing as parameters, for example, those which determine its structure. In this particular case, the parameters are:

a) The number of layers of the neural network (integer vector) proposed by the owner user as a solution.

b) The number of neurons of each layer (integer vector). As a result of a) and b), the proposed topology in the solution is known and the neurons would remain numbered, following the standard model of the graphical representation of a neural network, from left to right and from top to bottom.

c) The weight x of each connection between a neuron i and a neuron j. The form of expressing this parameter would be by means of a triple vector [i, j, x].

It is possible for there to be more than one model in the smart contract which is applicable to one and the same data set. In these cases, it can be provided with a specific initial parameter in the smart contract which indicates the type of model used by the computing service provider user which processes the data. Thereby, any option and model in the context of the invention is computationally manipulated.

According to another more complex embodiment, the use of a family of models which are predefined and identified in the smart contract by means of a specific initial parameter, for example, an index, is allowed. Said index will be a natural number associated with each of the models allowed.

In the event of having three mathematical models, such models would be specified in the smart contract, and by way of example they would be represented as follows:

1. Neural networks
2. Naive Bayes
3. Fisher's discriminant

In a particular embodiment, *the computing service provider user receives, if there are available cryptocurrency units in the smart contract, the amount of cryptocurrency units established by the measurement function of the reward value in its particular blockchain account during step d.ix) of the method.*

According to one embodiment, both the owner user and the computing service provider users each have a blockchain account which allows the storage of cryptocurrency units and transactions with same. In another embodiment, the storage of cryptocurrency units and transactions with same are performed through electronic wallets, which are understood to be software which allows managing the accounts and their cryptocurrency units.

The use of the smart contract guarantees that any computing service provider user which records a solution or an approach to the solution in the smart contract will receive their reward because if there are no available cryptocurrency units, it impedes the registration of said solution. In an even more advantageous manner, the use of blockchain for exchanging virtual currencies does not require the presence of intermediaries, where the transaction between the smart contract and the computing service provider user can be performed in a direct and reliable manner.

In a particular embodiment, *the method additionally comprises a computing service provider user recording in the smart contract a solution or an approach to the solution until recording a solution or an approach to the solution with a precision value which is within the range of higher precision predefined in the smart contract to have a positive reward.*

Throughout the document, valid smart contract must be understood to mean a smart contract which allows recording and giving out rewards, i.e., the smart contract remains valid provided that there is a possibility of recording solutions or approaches to the solution with precisions higher than those already achieved, without the need to pre-establish a specific duration for the smart contract.

After recording a solution in the highest possible range of rewards, the smart contract is no longer valid, i.e., the smart contract is stored in the blockchain as it cannot be deleted, but it will no longer record solutions and give out rewards.

In a particular embodiment, *the encrypted data is accessible through the link comprised in the smart contract, wherein the method further comprises in step a) the following sub-steps:*

- *calculating a first hash of the data accessible in said link,*
- *recording the first hash in the smart contract, and wherein the method comprises concurrently performing in any of steps b) to d) an integrity test which comprises:*
- *calculating a second hash of the data accessible in said link,*
- *comparing the first hash and the second hash, and in the event that they are different, not approaching the search*

*for solutions since the data is corrupt.*

Throughout this document, integrity test will be understood to mean a software process whereby it is determined that the data on which the test operates has not experienced any type of corruption, intentional or otherwise.

The integrity test is necessary when the data is stored outside the blockchain. In order for the data to be accessible, there has to be provided a link to said storage outside blockchain stored in the smart contract. This type of data storage entails cost savings because the larger the volume of information stored in the blockchain, generally the more expensive the deployment of the smart contract.

In this case, it is indispensable to have an integrity test which assures that the data stored outside the blockchain is not corrupt. However, if the data is contained in the blockchain, said integrity test would not be necessary as the blockchain itself guarantees that there will not be any modification of the data throughout the entire execution of the smart contract.

In a particular embodiment, *the computing service provider user has additional information about interaction with the smart contract accessible through the Internet, particularly the identifier of the blockchain holding the smart contract, the address where the smart contract is stored in the blockchain, and a description of the interface of the smart contract.* Furthermore, a list of programs which allow connecting to the corresponding blockchain can be included.

The addition of information about interaction with the smart contract entails help for the computing service provider user which advantageously streamlines the cooperation between the two entities as both parties know how they have to interact through it. Smart contracts are normally obfuscated in blockchain, so if their address and details about their interface are not available, the interaction is virtually impossible.

In a particular embodiment, the encrypted data set is divided into encrypted data subsets according to a partitioning strategy declared in the smart contract or in the information about the smart contract accessible through the Internet; and wherein the encrypted data subsets used by the computing service provider user or users for obtaining the solution or approach to the solution are obtained according to the partitioning strategy; and wherein the evaluation function is applied according to the partitioning strategy on at least one subset of those obtained according to said partitioning strategy, with the final precision measured by the evaluation function being a value which considers the precision or precisions obtained with each encrypted evaluation data subset.

The total data set available in the smart contract or accessible through a link comprised in the smart contract is partitioned to prevent the existence of overfitting. One skilled in the art knows that said problem arises when a solution is optimized for a specific data set such that its precision is significantly lessened when it is applied on enlarged or different data sets even though they have the same origin. To prevent this, it would be ideal to use several data subsets to find the solution and evaluate it.

The data set partitioning strategy, also referred to as cross-validation, is declared either in the smart contract or in the description of the smart contract available through the Internet.

Computing service provider users may thereby conduct a search for the solution consistent with this strategy, and the evaluation function will evaluate the precision of the model with each evaluation data subset to obtain an overall precision measurement (which will be very similar to the precision measurement obtained locally by the computing service provider user in the solution search phase). This overall precision measurement is what will later be used to determine the reward (taking into account previously recorded ranges and solutions).

In a particular example, a Stratified K-fold, K-fold, or Leaving one out type of data partitioning strategy is used, strategies that split the data set into random subsets in a balanced manner. Therefore, the precision of the model found with each of the evaluation data subsets is evaluated, and an overall precision measurement is obtained following the declared method, such as calculating a mean precision or choosing the worst of the obtained precisions, for example.

In a second inventive aspect, the invention provides *a data processing system comprising means for carrying out any of the described embodiments of the method of the first inventive aspect.*

In a third inventive aspect, the invention provides a *computer program comprising instructions which, when the program is run by a computer, cause the computer to carry out:*

- *the described embodiments of the method of the first inventive aspect corresponding to the owner of the smart contract (also owner of the data), or*
- *the described embodiments of the method of the first inventive aspect corresponding to the computing service providers, or*
- *the steps of both;*

*according to any of the described embodiments of the method of the first inventive aspect.*

The term computer must be interpreted in a non-restrictive manner, not only as a personal computer but rather as a set of computational resources capable of carrying out the instructions constituting the computer program. This is the case, for example, of execution modes identified "as a service", such as execution platforms in the cloud, for example, where execution is done remotely. This is also the case of mobile terminals referred to as smartphones, which can be identified as computers capable of executing programs, normally referred to as "Apps".

In a fourth inventive aspect, the invention provides a *computer-readable medium comprising instructions which, when are executed by a computer, cause the computer to carry out any of the described embodiments of the method of the first inventive aspect.*

All the features and/or method steps described in this specification (including the claims, description, and drawings) can be combined in any combination, with the exception of the combinations of such mutually exclusive features.

Description of the Drawings

These and other features and advantages of the invention will become clearer based on the following detailed description of a preferred embodiment, given solely by way of illustrative and non-limiting example, in reference to the attached drawings.

Figure 1    In this figure it is shown a diagram of the architecture on which the data processing method and the communication flows between the cooperating entities and the smart contract is based.

Figure 2    In this figure it is illustrated a particular execution example of the measurement function of the reward value.

Figure 3    In this figure it is shown a diagram of the operation of the integrity test.

Detailed Description of the Invention

The present invention describes a computer-implemented method (100) for processing a data set (1) of an owner user (2) owning the data by one or more computing service provider users (3) under non-disclosure conditions, the method operating through a smart contract (4) stored in a blockchain (5) configured for supporting cryptocurrency management and executing the smart contract (4).

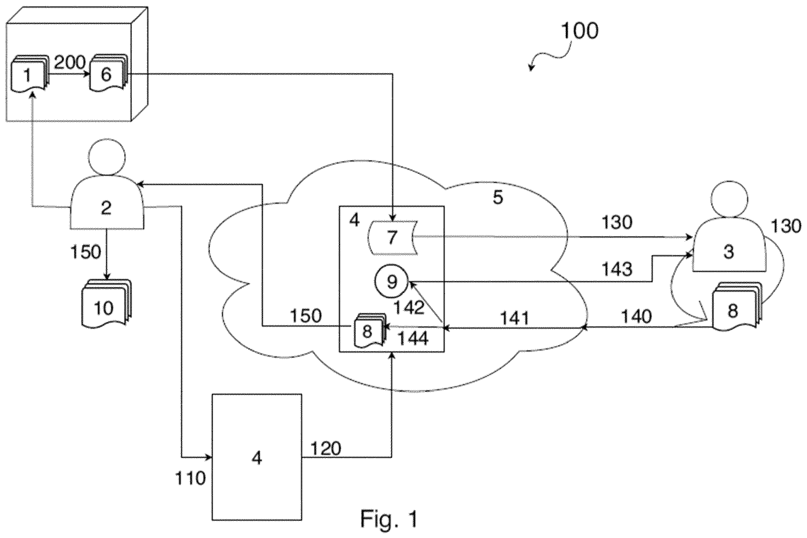

Figure 1 shows a diagram of the architecture on which the computer-implemented method (100) for data processing under non-disclosure conditions together with the communication flows between the cooperating entities and the smart contract (4) is based, the method (100) comprising the following steps:

a) the owner user (2) generating (110) a smart contract (4) comprising:

- the data set (1) to be processed which is encrypted (6) by means of a homomorphic encryption algorithm or a link (7) to said data set (1) to be processed which is encrypted (6), wherein the homomorphic encryption comprises a step of encrypting (200) data (1) in plaintext for obtaining the encrypted data (6) and a step of decrypting (150) other data that was previously encrypted (approaches to the solution which will be recorded by the computing service providers (3)) in order to retrieve the corresponding data in plaintext, wherein said homomorphic encryption also comprises a predetermined set of pairs of operators formed by an original operator and an equivalent operator associated with the original operator, which verify the following condition: given one or more arguments expressed in plaintext and operated with a specific original operator, the equivalent operator applied to the same arguments encrypted with the step of encrypting provides an also encrypted result which, once decrypted by means of the step of decrypting to express the result in plaintext, has a value equal to the result of applying the original operator on the arguments also expressed in plaintext,
- processing specifications of the data to be processed comprising:

i. identification of the homomorphic encryption used in the encryption of the data set (1) to be processed together with the set of available pairs of operators of the homomorphic encryption and the evaluation key which allows operating data in the homomorphic domain,
ii. a mathematical problem solvable by means of processing the data set (1) to be processed by means of the set of operators available in homomorphic encryption, wherein the solution or an approach to the solution (8) of the mathematical problem is expressible in the form of one or more numerical parameters, and wherein the solution or the approach to the solution (8) has a precision value,
iii. an evaluation function of the solution or the approach to the solution configured for measuring the precision of the solution or of the approach to the solution (8) when it is encrypted,
iv. a measurement function of the reward value (9) which determines the remuneration to be returned to the computing service provider user (3), with this being a value dependent on at least the evaluation function;

v. a reward amount (9) in cryptocurrency units to be distributed among the computing service provider users (3) when a solution or an approach to the solution (8) is recorded in the smart contract (4), such that the reward function determines a positive value;

vi. a reward process executable by the smart contract (4) receiving a solution or an approach to the solution (8) which is encrypted sent by a computing service provider user (3), transferring the amount of cryptocurrency units established by the measurement function of the reward value (9), if there are available cryptocurrency units, to said computing service provider user (3), with said solution or approach to the solution (8) being recorded in the smart contract (4);

b) the owner user (2) deploying (120) the smart contract (4) in the blockchain (5), enabling the computing service provider users(3) of the blockchain to access the smart contract (4),

c) solving (130) the mathematical problem of the smart contract (4) by processing the encrypted data set (6) until obtaining a solution or an approach to the solution (8) which is encrypted with a precision with a reward value (9) that is positive according to the measurement function of the reward value, wherein said precision is determined by each of the computing service provider users (3) executing the evaluation function,

d) each of the computing service providers executing (140) the reward process of the smart contract (4), using the solution or approach to the solution (8) as an argument. The execution of this process involves the following steps:

*i. the smart contract (4) receiving (141) said solution or approach to the solution (8),*

*ii. executing (142) the measurement function of the reward value for said solution or approach to the solution (8),*

*iii. providing (143) the reward (9) established by the reward function to the computing service provider user (3) of the evaluated solution if there are available cryptocurrency units and if the value returned by the measurement function of the reward value is positive,*

*iv. recording (144) said solution or approach to the solution (8) that is evaluated in the smart contract (4) if a reward was received,*

e) the owner user (2) decrypting (150) the solution or solutions or approach or approaches to the solution (8) which is recorded, obtaining the solution or solutions or approach or approaches to the solution expressed in plaintext (10).

The problem to be solved in this embodiment of the invention schematically shown in Figure 1 is to have a mathematical model capable of predicting the condition of a patient being diabetic based on certain data. The personal and medical information relating to said patients must always be processed in an encrypted manner given its confidential nature.

The owner user (2) must generate a smart contract comprising the data set (1) to be processed which must be encrypted (6) by means of homomorphic encryption and a set of processing specifications of said encrypted data (6).

It can be seen in Figure 1 that the data in plaintext (1) is stored outside the smart contract (4) and that the transition of the data in plaintext (1) to encrypted data (6) is performed by means of a step of encrypting (200) data, for which purpose the owner user (2) needs a public homomorphic key. Said key, together with the rest of keys that will be required throughout the entire process, i.e., secret homomorphic and evaluation keys, are generated from a series of parameters defined by the actual owner user (2).

The parameters defined in this example by the owner user (2) which are required for creating the homomorphic keys are the polynomial modulus, the coefficient modulus, the plaintext modulus, the standard deviation of noise, and the maximum deviation of noise.

With the public key, the owner user (2) can encrypt the data; with the secret key, said user can decrypt the solutions or approaches to the solution (8) and the evaluation key must be provided to the computing service providers (3) so that they may process the data and obtain the solution or approach to the solution (8).

In this example, both the generation of the keys and the encryption/decryption of the data and the processing thereof are performed with the Microsoft SEAL library.

On the other hand, the data which is provided that is encrypted (6) with the public homomorphic key initially created are a, age (in years); RCPG, level of randomly measured capillary plasma glucose (in mg/dl); PT, the number of hours since the last intake of food or beverage (in hours); sex (male/female); BMI, body mass index, and the diabetic/non-diabetic condition of a series of patients.

Based on this data, a logistic regression model which allows classifying the diabetic/non-diabetic condition of a patient based on the aforementioned variables (a, RCPG, PT, sex, BMI) is to be obtained. This logistic regression model will correspond to the following sigmoid formula:

$$P(x) = \frac{e^x}{e^x + 1}$$

It is important to highlight that the truncated Taylor series expansion of the $P(x)$ function

$$P(x) \approx \frac{1}{2} + \frac{1}{4}x - \frac{1}{48}x^3 + \frac{1}{480}x^5 - \frac{17}{80640}x^7 + O(x^9)$$

will be used to enable operating on it with simple mathematical operators (addition, subtraction, multiplication, and division), which are available in the type of homomorphic encryption chosen in this example. The expected solution is of the following type $x = x0 + x1 \cdot a + x2 \cdot RCPG + x3 \cdot PT + x4 \cdot (sex = female) + x5 \cdot (sex = male) + x6 \cdot BMI$, together with a threshold value x7 such that $P(x) > x7$ classifies the patient as diabetic. Therefore, any approach to the solution is defined by means of the vector of values [x0, x1, x2, x3, x4, x5, x6, x7].

It must be taken into account that the vectors of values [a, RCPG, PT, sex, BMI] and [x0, x1, x2, x3, x4, x5, x6, x7] are encrypted, and that equivalent operators in the homomorphic encryption domain must be used for the function evaluation.

It can be seen in Figure 1 that the encrypted data (6) is not integrated in the smart contract (4), but rather is available through the link (7) which is indeed stored in said smart contract (4).

Once all the required data has been encrypted, the owner user must define in the smart contract (4) the processing specifications of the data.

- An identification of the homomorphic encryption, of its pairs of operators, and of the evaluation key which allows operating the data in the homomorphic domain. As already mentioned, in this example the Microsoft SEAL library has been chosen to be used. The encryption scheme implemented by SEAL is the Brakerski/Fan-Vercauteren (BFV) scheme, the security of which is based on the Ring Learning with Errors (RLWE) problem.
- A mathematical problem (being capable of classifying a patient as diabetic/non-diabetic) relating to the processing of the encrypted data set (6) (personal and medical data of the patient as well as the prediction equation, expressed as the truncated Taylor series expansion) to be solved, fitting a logistic regression model, by one or several computing service provider users (3) by means of the set of operators available in homomorphic encryption and by using the evaluation key.
- An evaluation function of the solution or approach to the solution (8) which measures the precision of said solution or approach to the solution (8) which is encrypted. In this case, the evaluation corresponds to the calculation of the percentage of patients from the data set (6) correctly classified as diabetic/non-diabetic according to the proposed approach to the solution,
- A measurement function of the reward value which determines the reward to be delivered to the computing service provider user (3), in this case:

   ∘ 1 ETH if $0.85 \leq$ precision $\leq 0.90$ and prior solutions have not been recorded in this range;
   ∘ 3 ETH if $0.90 <$ precision $\leq 0.95$ and prior solutions have not been recorded in this range;
   ∘ 6 ETH if $0.95 <$ precision and prior solutions have not been recorded in this range.

   In this specific example, precision is defined as the percentage of correctly classified patients. ETH represents the native cryptocurrency of the main Ethereum network.
- A reward amount (9) in cryptocurrency units, 10 ETH, to be distributed among computing service provider users (3) when they record in the blockchain (5) a solution or an approach to the solution (8) which can be rewarded, and
- A reward process implemented in the smart contract (4) and executed by the computing service provider users (3), which receive the approach to the solution (8), evaluates its precision by means of the corresponding function, and transfers the amount of cryptocurrency units established by the measurement function of the reward value to the computing service provider user (3). If the reward amount is positive, the solution or approach to the solution (8) will be recorded together with its precision value in the smart contract (4). In this particular example, it is defined in the smart contract (4) that the computing service provider users (3) will receive their corresponding reward (9) in their particular blockchain accounts (5).

Once the owner user (2) has defined the conditions of the smart contract (4), it must deploy (120) it in the blockchain (5) (the main Ethereum network being the blockchain (5) chosen in this particular example) so that it is accessible for other entities and they may thereby cooperate with one another. The data for accessing the smart contract (4) (Main Ethereum Network ID in Ethereum: 1, address of the smart contract in main Ethereum network: 0x74FD51a98a4A1ECBeF8Cc43be801cce630E260Bd, interface of the *smart contract* (4): abi_diabetes_predictor.json file), as well as a detailed description of the problem to be solved and of the reward policy, are available through an external web which any of said entities may access. Then, any computing service provider user (3) which accepts the conditions of the smart contract (4) shall proceed to try to solve (130) the mathematical problem of the smart contract (4) by processing the encrypted data set (6). As can be seen in Figure 1, this step will be performed in an iterative manner until obtaining a solution or an approach to the solution (8) which has a precision such that it may be rewarded (in this embodiment with at least a precision ≥ 0.85). In order to know the precision, the computing service provider user (3) will have to execute the evaluation function on its solution or approach to the solution (8) .

The computing service provider user (3) always accesses the data when it is encrypted, and therefore it is unable to deduce values which are relevant for the owner user (2). Nevertheless, by observing that the proposed solutions give rise to values provided by the evaluation function of better solutions, the computing service provider user (3) knows whether or not its computational effort is directed at a converging solution.

In an alternative embodiment, the evaluation function of the solution or the approach to the solution or approach to the solution (8) will be configured for measuring the error of the solution or of the approach to the solution (8) when it is encrypted. Said error is defined as the maximum precision value possible minus the precision value obtained.

The operators used by the computing service provider user (3) will be those of the homomorphic encryption identified in the smart contract (4) for operating with encrypted data. The operators used by the owner user (2) will be the mathematical operators normally used for operating in plaintext and having their equivalent operator in the encrypted space according to the pre-established homomorphic encryption. In this example, as it is an exponential function, it was necessary to use a truncated Taylor series expansion to enable applying the simple operators available in the chosen homomorphic encryption (addition, multiplication, subtraction, and division).

Furthermore, it should be pointed out that the computing service provider user (3) needs the homomorphic evaluation key defined in the smart contract (4) to enable processing the data in the homomorphic domain.

The computing service provider user (3) will search for solutions by applying the mathematical methods it considers most suitable taking into account the model of the problem. In this case, since it is a logistic regression problem, the iterative search could be performed by means of the maximum likelihood method.

Once a solution or an approach to the solution (8) susceptible to being rewarded has been achieved, the computing service provider user (3) executes (140) the reward method of the smart contract (4). This entails the smart contract (4) receiving (141) the solution or approach to the solution (8), and executing (142) the measurement function of the reward value with respect to said solution or approach to the solution (8). This function evaluates if the solution or approach to the solution (8) which has been submitted meets the conditions for being rewarded, and in such case, the cryptocurrency units of the reward (9) are calculated depending on the precision which has been reached, and are provided (143) to the computing service provider user (3) that presented said solution or approach to the solution (8); particularly, the reward (9) is received in the user's personal blockchain account (5), as defined in the smart contract (4). Finally, the solution or approach to the solution (8) is recorded (144) in the smart contract (4) provided that it has been rewarded.

In an alternative embodiment, the computing service provider users (3) receive the rewards in their virtual wallets.

In a particular example, in addition to the solution or approach to the solution (8), the precision that is reached is recorded such that other computing service provider users (3) know that they must surpass said precision or, in the event that it is the maximum precision that can be reached, abandon the processing of the encrypted data (6) as there are no more available rewards.

Finally, the owner user (2) accesses the solution or approach to the solution (8) recorded in the smart contract (4), downloads it outside the blockchain (5), and decrypts (150) it to thereby obtain the solution or approach to the solution expressed in plaintext (10). To enable decrypting the solution, the initially generated secret homomorphic key will be needed.

In this case, the owner has achieved an approach to the solution (-10.0382, 0.0331, 0.0308, 0.2500, 0.5620, 0, 0.0346. 0.20) with the highest degree of precision (> 0.95) in exchange for a reward of 6 ETH:

$$P(x) = \frac{e^x}{e^x + 1}$$

$$x = -10.0382 + 0.0331 \cdot a + 0.0308 \cdot RCPG + 0.2500 \cdot PT + 0.5620$$

$$\cdot (if\ the\ patient\ is\ a\ woman) + 0.0346 \cdot BMI$$

A threshold value pre-established at 0.20 gives rise to P(x) > 0.20 classifying the result as diabetic

In a particular example, the owner user (2) has not introduced in the smart contract (3) the cryptocurrency units defined in the agreement itself. In such case, the requirement of having the required cryptocurrency units available for the reward (9) in step d.ix) of the method (100) is not met, so the solution or approach to the solution (8) is not recorded in the smart contract (4) and the owner user (2) cannot access it as the agreed upon conditions of the agreement are not met.

In another particular example, the encrypted data (6) is stored in the blockchain (5), so the computing service provider user (3) can access it directly without needing the smart contract (4) to contain a link (7). In another particular example, the encrypted data (6) is stored in a different smart contract (4) in the same blockchain (5) or a different blockchain.

In an alternative embodiment, the computing service provider user (3) can access additional information about the smart contract (4) *through* the Internet; for example, by means of different web pages or social media such as Twitter or LinkedIn. This additional information comprises relevant data about the interaction between a computing service provider user (3) and the smart contract (4) itself; particularly, the identifier of the blockchain (5) holding the smart contract (4), the address where the smart contract (4) is stored in the blockchain (5), and a description of the interface of the smart contract (4). Other data of interest that may be included are the programs which allow connecting to the corresponding blockchain (5), a description of the purpose of the smart contract (4), and/or the description of the reward policy.

*Execution (140) of the reward method*

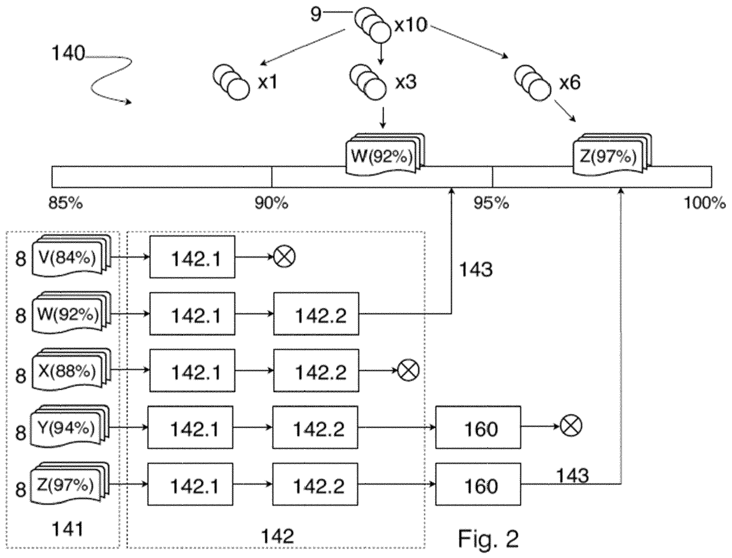

Figure 2 shows a particular example of the execution (140) of the reward method, wherein there are received (141) several solutions or approaches to the solution (8) on which the measurement function of the reward value is executed (142).

The execution (142) of said measurement function of the reward value checks:

- if the precision value of an approach received is less than a pre-established threshold value (142.1), and
- if another solution or another approach to the solution (8) has previously been recorded, if the solution or approach to the solution (8) of the computing service provider user (3) has a precision value lower than the previously recorded precision values (142.2),

wherein the value of the reward (9) is null in any of these cases.

Furthermore, in this example of Figure 2, the measurement function of the reward value is established by predefining a plurality of ranges of values for the precision value and assigning a value of the measurement of the reward value (9) for each of the ranges, such that given a precision value measured with respect to a solution or an approach to the solution (8), the measurement function of the reward value returns the value of the measurement assigned to the range in which said precision value is found.

Given this plurality of ranges of values for the precision value, upon receiving a solution or an approach to the solution (8) identified in a specific range of values by its precision, the smart contract (4) checks if another solution or another approach to the solution (8) has previously been recorded in the same range of values (or in a higher one), in which case the reward (9) is also null.

Particularly, in the example of Figure 2 three different ranges of precision values have been defined in the smart contract (4) :

- Lower range [85% - 90%]
- Intermediate range (90% - 95%]
- Upper range (95% - 100%]

The total cryptocurrency units available in the smart contract (4) are furthermore 10 units, which are distributed depending on the range of precision values:

- Lower range: 1 cryptocurrency unit
- Intermediate range: 3 cryptocurrency units
- Upper range: 6 cryptocurrency units

In this particular example, upon receiving (141) a solution *V* with a precision of 84%, the measurement function of the reward value checks (142.1) if this precision value is less than a threshold value corresponding to the minimum precision value of the lower range of precision values, i.e., 85% precision. Solution *V* therefore has null reward.

Next, a solution *W* with a precision of 92% is received (141). The measurement function of the reward value checks (142.1) that the precision of solution *W* is not below the minimum threshold and proceeds to check (142.2) if another solution or approach to the solution (8) has previously been recorded. As there is no existing previously recorded solution or approach to the solution, solution *W* is recorded in the smart contract (4), and the computing service provider user (3) owning solution *W* receives (143) as a reward (9) the 3 cryptocurrency units associated with its range of precision values.

Later, upon receiving (141) a new solution *X* with a precision of 88%, the measurement function of the reward value checks (142.1) that the precision of solution *X* is not below the minimum threshold and proceeds to check (142.2) if another solution (8) has previously been recorded. As there is a recorded solution *W,* it proceeds to check if solution *X* has a precision value (88%) lower than the precision value of solution W (92%). Where this condition is met, solution *X* also has a null reward.

Subsequently, upon receiving (141) a solution *Y* with a precision of 94%, the measurement function of the reward value checks (142.1) that the precision of solution *Y* is not below the minimum threshold and proceeds to check (142.2) if another solution or approach to the solution (8) has previously been recorded. As there is a recorded solution *W,* it proceeds to check if solution *Y* has a precision value (94%) lower than the precision value of solution *W* (92%). As this condition is not met, the smart contract (4) checks (160) if the precision of solution *Y* belongs to the same range of precision values or to a lower range of precision values than the already recorded solution *W.* Given that this range covers precision values of 90% to 95%, solution *Y* belongs to the same range of precision values as solution *W,* so it also has a null reward.

Finally, a final solution *Z* with a precision of 97% is received. The measurement function of the reward value checks (142.1) that the precision of solution *Z* is not below the minimum threshold (151) or below the precision of recorded solution *W* (142.2). Furthermore, the smart contract (4) checks (160) that the precision of solution *Z* belongs to a range of precision values greater than that of solution *W,* so solution *Z* does not have null reward and would be recorded in the smart contract (4), specifically in the upper range of precision values. The computing service provider user (3) owning solution Z will receive (143) as a reward (9) the 6 cryptocurrency units associated with its range of precision values.

As a solution or an approach to the solution (8) with a precision value which is within the predefined range of higher precision in the smart contract (4) has been recorded, all the conditions of the agreement are met, and the smart contract (4) is no longer valid. That is, the smart contract (4) continues to be in the blockchain (5), and there may be computing service providers (3) which attempt to send new solutions. The solutions would reach the smart contract (4), but the latter will never reward or record them.

In another particular example which can be described through Figure 2, when solution *W* is recorded in the smart contract (4), the owner of said solution *W* receives (143) as a reward the sum of the cryptocurrency units associated with the range of precision values to which its precision of 92% belongs (3 cryptocurrency units) and of the cryptocurrency units of the lower ranges of precision values which have not yet been provided to any computing service provider user (1 cryptocurrency unit). Therefore, the final reward is 4 cryptocurrency units.

In another particular example which can also be described through Figure 2, when solution *W* is recorded in the smart contract (4), the owner user of the smart contract (4) receives the reimbursement of the cryptocurrency units of the ranges of precision values lower than the range of solution *W* provided that they still have not been provided to a computing service provider user. In this case, there is only one range below the intermediate range without a reward being provided, so the reimbursement is of 1 cryptocurrency unit.

*Operation of the integrity test (300) of the method (100)*

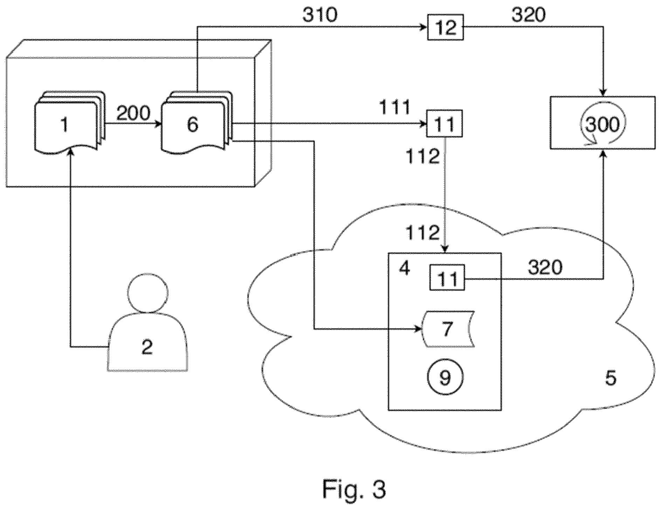

Figure 3 illustrates a diagram of the operation of the integrity test of the method (100) required when the encrypted data (6) is accessible through the link (7) comprised in the smart contract (4). During the generation of the smart contract (4), the following sub-steps are necessary:

- calculating (111) a first hash (11) of the data (6) accessible in said link (7),
- recording (112) the first hash (11) in the smart contract (4), and

concurrently to the rest of the execution of the method (100), the integrity test (300) is applied by means of the steps of:

- calculating (310) a second hash (12) of the data (6) accessible in said link (7),
- comparing (320) the first hash (11) and the second hash (12), and in the event that they are different, not approaching the search for solutions (8) since the data (6) is corrupt.

In order to check if the data not stored in the blockchain (5) has experienced some type of corruption, an integrity test (300) must be performed. To that end, a first hash (11) of the encrypted data (6) which is stored externally but is accessible through a link (7) contained in the smart contract (4) is calculated (111). Said link cannot be modified or deleted since it is stored in the blockchain (5).

Then, the first hash (11) is recorded (112) in the smart contract (4), which will serve as a basis for the integrity test (300). During said integrity test (300), a second hash (12) of the data (6) accessible in the link (7) is calculated (310) and compared (320) with the first hash (11). In the event that both hashes are not equal, the data (6) is corrupt and the process of searching for solutions (8) ends.

In a particular example, every time a computing service provider user (3) accesses the data (6) through the link (7) of the smart contract (4), it applies the integrity test (300) before starting to search for a solution or an approach to the solution (8).

**Claims**

1. A computer-implemented method (100) for processing a data set (1) under non-disclosure conditions, the data set (1) belonging to an owner user (2) and being processed by one or more computing service provider users (3), the method operating through a smart contract (4) stored in a blockchain (5) configured for supporting cryptocurrency management and executing the smart contract (4), wherein the method (100) comprises the following steps:

   a) the owner user (2) generating (110) a smart contract (4) comprising:

   - a data set (1) to be processed which is encrypted (6) by means of a homomorphic encryption algorithm or a link (7) to said data set (1) to be processed which is encrypted (6), wherein the homomorphic encryption comprises a step of encrypting (200) data (1) in plaintext for obtaining the encrypted data (6) and a step of decrypting (150) the data that was previously encrypted in order to retrieve the data in plaintext, wherein said homomorphic encryption also comprises a predetermined set of pairs of operators formed by an original operator and an equivalent operator associated with the original operator, which verify the following condition:

   given one or more arguments expressed in plaintext and operated with a specific original operator, the equivalent operator applied to the same arguments encrypted with the step of encrypting provides an also encrypted result which, once decrypted by means of the step of decrypting to express the result in plaintext, has a value equal to the result of applying the original operator on the arguments also expressed in plaintext,

   - processing specifications of the data to be processed comprising:

   i. identification of the homomorphic encryption used in the encryption of the data set (1) to be processed together with the set of available pairs of operators of the homomorphic encryption and the evaluation key which allows operating data in the homomorphic domain,
   ii. a mathematical problem solvable by means of processing the data set to be processed (6) by means of the set of operators available in homomorphic encryption, wherein the solution or an approach to the solution (8) of the mathematical problem is expressible in the form of one or more numerical parameters, and wherein the solution or the approach to the solution (8) has a precision value,
   iii. an evaluation function of the solution or the approach to the solution (8) configured for measuring the precision of the solution or of the approach to the solution (8) when it is encrypted,
   iv. a measurement function of the reward value which determines the remuneration to be returned to the computing service provider user (3), with this being a value dependent on at least the evaluation function,
   v. a reward amount (9) in cryptocurrency units to be distributed among the computing service provider users (3) when a solution or an approach to the solution (8) is recorded in the smart contract (4), such that the reward function determines a positive value,
   vi. a reward process executable by the smart contract (4) receiving a solution or an approach to the solution (8) which is encrypted sent by a computing service provider user (3), transferring the cryptocurrency reward amount established by the measurement function of the reward value (9), if there are available cryptocurrency units, to said computing service provider user (3), with said solution or approach to the solution (8) being recorded in the smart contract (4) ;

   b) the owner user (2) deploying (120) the smart contract (4) in the blockchain (5), enabling the computing service provider users (3) of the blockchain (5) to access the smart contract (4),

c) one or more computing service provider users (3) solving (130) the mathematical problem of the smart contract (4) by processing the encrypted data set (6) until obtaining a solution or an approach to the solution (8) which is encrypted with a precision with a reward value (9) that is at least positive according to the measurement function of the reward value, wherein said precision is determined by each of the computing service provider users (3) executing the evaluation function,

d) one or more computing service provider users executing (140) the reward process of the smart contract (4), with a positive reward value, wherein the reward process is according to the following steps:

vii. the smart contract (4) receiving (141) said solution or approach to the solution (8),

viii. executing (142) the measurement function of the reward value for said solution or approach to the solution,

ix. providing (143) the reward (9) established by the reward function to the computing service provider user (3) of the evaluated solution if there are available cryptocurrency units and if the value returned by the measurement function of the reward value is positive,

x. recording (144) said solution or approach to the solution (8) that is evaluated in the smart contract (4) in the event of a reward having been sent,

e) the owner user (2) decrypting (150) the solution or solutions or approach or approaches to the solution (8) recorded in the smart contract (4), obtaining the solution or solutions or approach or approaches to the solution expressed in plaintext (10) .

2. Method (100) according to the preceding claim, wherein for each reward (9) that is given, the solution or approach to the solution (8) and the precision value associated with the solution or approach to the solution (8) are recorded in the smart contract (4).

3. Method (100) according to the preceding claim, wherein the measurement function of the reward value checks:

- if the precision value is less than a pre-established threshold value (142.1), and
- if another solution or another approach to the solution (8) has previously been recorded, if the solution or approach to the solution (8) of the computing service provider user (3) has a precision value lower than the previously recorded precision values (142.2),

wherein the value of the reward (9) is null in any of these cases.

4. Method (100) according to any of the preceding claims, wherein the measurement function of the reward value is established by predefining a plurality of ranges of values for the precision value and assigning a value of the measurement of the reward value (9) for each of the ranges, such that given a precision value measured with respect to a solution or an approach to the solution (8), the measurement function of the reward value returns the value of the measurement assigned to the range in which said precision value is found.

5. Method (100) according to claim 4, wherein given a solution or an approach to the solution (8) identified in a specific range of values by its precision, the smart contract (4) checks (160) if another solution or another approach to the solution (8) has previously been recorded in the same range of values or in higher ranges, in which case the reward (9) is null.

6. Method (100) according to claim 5, wherein the reward (9) of a solution or an approach to the solution (8) identified in a specific range of values by its precision is the sum of the reward corresponding to said range of precision values and of the rewards corresponding to lower ranges of precision values which have not previously been provided to any computing service provider user (3).

7. Method (100) according to claim 5, wherein after recording a solution or an approach to the solution (8) identified in a specific range of values by its precision, the smart contract (4) provides to the owner user (2) reimbursement for the rewards (9) corresponding to the lower ranges of precision values which have not previously been provided to any computing service provider user (3).

8. Method (100) according to any of the preceding claims, wherein the data processing specifications additionally comprise a pre-established numerical model as well as the identification of the parameters which the numerical model comprises.

9.  Method (100) according to any of the preceding claims, wherein the computing service provider user (3) receives, if there are available cryptocurrency units in the smart contract (4), the amount of cryptocurrency units established by the measurement function of the reward value (9) in its particular blockchain account (5) during step d.ix) of the method (100).

10. Method (100) according to any of claims 4 to 9, wherein the method (100) additionally comprises a computing service provider user (3) recording in the smart contract (4) a solution or an approach to the solution (8) until recording a solution or an approach to the solution (8) with a precision value which is within the range of higher precision predefined in the smart contract (4) to have a positive reward (9).

11. Method (100) according to any of the preceding claims, wherein the encrypted data (6) is accessible through the link (7) comprised in the smart contract (4), wherein the method (100) further comprises in step a) the following sub-steps:

    - calculating (111) a first hash (11) of the data (6) accessible in said link (7),
    - recording (112) the first hash (11) in the smart contract (4), and

    wherein the method (100) comprises concurrently performing in any of steps b) to d) an integrity test (300) which comprise:

    - calculating (310) a second hash (12) of the data (6) accessible in said link (7),
    - comparing (320) the first hash (11) and the second hash (12), and in the event that they are different, not approaching the search for solutions (8) since the data (6) is corrupt.

12. Method (100) according to any of the preceding claims, wherein the computing service provider user (3) has additional information about interaction with the smart contract (4) accessible *through* the Internet, at least the identifier of the blockchain (5) holding the smart contract (4), the address where the smart contract (4) is stored in the blockchain (5), and a description of the interface of the smart contract (4).

13. Method (100) according to any of the preceding claims, wherein the encrypted data set (6) is divided into encrypted data subsets according to a partitioning strategy declared in the smart contract (4) or in the information about the smart contract (4) accessible *through* the Internet; and
    wherein the encrypted data subsets used by the computing service provider user or users (3) for obtaining the solution or approach to the solution (8) are obtained according to the partitioning strategy; and
    wherein the evaluation function is applied according to the partitioning strategy on at least one subset of those obtained according to said partitioning strategy, with the final precision measured by the evaluation function being a value which considers the precision or precisions obtained with each encrypted evaluation data subset.

14. A data processing system comprising means for carrying out the steps of the method (100) according to any of the preceding claims.

15. A computer program comprising instructions which, when the program is run by a computer, cause the computer to carry out:

    - the steps of the method (100) corresponding to the owner user (2), or
    - the steps of the method (100) corresponding to the computing service provider or providers (3), or
    - the steps of both;

    according to any of claims 1 to 13.

16. A system that is executable in the cloud infrastructure comprising instructions which, when run, carry out:

    - the steps of the method (100) corresponding to the owner user (2), or
    - the steps of the method (100) corresponding to the computing service provider or providers (3), or
    - the steps of both;

    according to any of claims 1 to 13.

17. A computer-readable medium comprising instructions which, when run by a computer, cause the computer to carry out the steps of the method (100) according to claims 1 to 13.

EP 3 660 765 A1

Fig. 1

19

Fig. 2

EP 3 660 765 A1

Fig. 3

Europäisches
Patentamt

European
Patent Office

Office européen
des brevets

# EUROPEAN SEARCH REPORT

**Application Number**

EP 18 38 2870

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIJING ZHOU ET AL: "BeeKeeper 2.0: Confidential Blockchain-Enabled IoT System with Fully Homomorphic Computation", SENSORS, vol. 18, no. 11, 5 November 2018 (2018-11-05), page 3785, XP055591978, DOI: 10.3390/s18113785 * the whole document * | 1-17 | INV. G06Q20/02 |
| A | Vipin Bharathan ET AL: "Hyperledger Architecture, Volume II Smart Contracts", , 26 April 2018 (2018-04-26), XP055592218, Retrieved from the Internet: URL:https://www.hyperledger.org/wp-content /uploads/2018/04/Hyperledger_Arch_WG_Paper _2_SmartContracts.pdf [retrieved on 2019-05-27] * page 10 - page 11 * | 1-17 | |

**TECHNICAL FIELDS SEARCHED (IPC)**

G06Q

The present search report has been drawn up for all claims

| Place of search | Date of completion of the search | Examiner |
|---|---|---|
| The Hague | 27 May 2019 | van Praagh, Kay |